# EUROPEAN PATENT APPLICATION

(11) **EP 1 614 464 A1**
(43) Date of publication of application: **11.01.2006**
(21) Application number: 05009876.3
(22) Date of filing: 06.05.2005
(51) Int. Cl.: B01L 3/00

(54) **Liquid reservoir connector**

(30) Priority: 03.07.2004 EP 04015700
(71) Applicant: Roche Diagnostics GmbH, 68305 Mannheim (DE); F. HOFFMANN-LA ROCHE AG, 4002 Basel (CH)
(72) Inventor: Sarofim, Emad, 6332 Hagendorn (CH); Curcio, Mario, 6048 Horw (CH)
(74) Representative: Irniger, Ernst

(57) **Abstract**

A device (7) for interconnecting at least one liquid reservoir (3) such as e.g. a storing chamber, a liquid transporting channel or a liquid transporting tube with an area on a test element to be supplied (9) and/or brought into contact with the liquid comprises a pre-shaped, capillary-like tube or conduit which is at least along a section at least nearly rigid. According to one possible design the capillary-like tube or conduit may be U-shaped with the two ends of the capillary-like tube or conduit being at least nearly rigid.

## Description

The present invention refers to a device for interconnecting at least one liquid reservoir, e.g. a storing chamber, a liquid transporting channel or a liquid transporting tube, with an area in or on a test element to be supplied and/or brought into contact with the liquid according to the introduction of claim 1 as well as to a configuration, comprising at least one device as well as to a method for interconnecting at least one liquid reservoir with an area to be supplied and/or brought into contact with the liquid, where the liquid reservoir and the area to be supplied or contacted with the liquid are on the same embodiment or on different embodiments, and are independent from each other.

In particular, this invention refers to a simple but efficient way of storing liquids within disposable devices by keeping them entirely separated from a fluidic channel and chemistry and/or a sample holding chamber contained therein until a connection is established by means of an external device, which can have beside a connecting function also a chemical/biological reactive or separating function.

### Background

Robustness and simplicity are the keys of a good IVD (in vitro diagnostics) test. Sometimes, robust assays based on reliable chemistry and detection are not simple because of, for example, the number of steps required, the level of manual operation and the need for skilled hands. Sample volumes and analysis time are other important issues.

Reducing the scale of the test, bringing it into a disposable, e.g. by using microfluidics, where all chemical steps are integrated, makes it simpler and faster, thus nearer to the patient. However, the robustness can be compromised. Although the chemistry of a disposable test format is the same as with a conventional laboratory test, the mode of reaction is indeed different, i.e. dry chemistry versus wet homogeneous chemistry. In most cases, the conditions should be changed. Sometimes the test itself should be changed, meaning big R&D effort. The general problem is a low degree of freedom in choosing assay and detection format, limited by geometry, volumes, surfaces, dissolving and diffusion rates, mixing efficiency, chemical stability and cost of manufacturing. Sometimes it would be just useful, other times necessary, to include also a washing or dilution step or to have a ready-to-use reagent separately stored in solution. The possibility to have liquid reservoirs integrated onto disposable test elements certainly helps reducing the R&D effort.

At present there are not many examples of integrated and simply actuated microcontainers which allow storage of liquids. Probably the most significant case is represented by the calibration solution pouch integrated into the i-STAT cartridges (US 2003/0 170 881 A1). Actuation consists in applying external pressure puncturing the pouch against a barb. In a patent application (US 2002/0 187 560 A1) microfluidic devices are described capable of combining discrete fluid volumes. Certain embodiments utilize adjacent chambers divided by a rupture region such as a frangible seal, others utilize deformable membranes and/or porous regions to direct fluid flow. Actuation can be pneumatically or magnetically assisted. In another patent application (US 2002/0 137 199 A1) are also disclosed devices and methods for storing and moving liquids by means of complex manufacture comprising quills or laminar, preformed or transfer sheets, requiring also complex actuation. A less recent but simple and still interesting application of liquid container (EP 0 279 574 B1) is represented by a deformable blister sealed by a membrane, which is rupturable by a spike shaped in the wall of the blister itself, allowing the reagent and/or carrier liquid to contact an absorbent strip and run along it. But other examples of integrated blisters exist like in EP 0 863 401 B1.

In US 3735640 A, the use of a bent needle having two pointed ends is described. This specifically refers to injection of a vaporized sample into a gas chromatograph, where the sample has to be introduced into a prechamber prior to injection.

It is an object of the present invention to propose a further simple means to obtain a connection between a liquid reservoir, e.g. a storing chamber or a fluidic channel with a further area or location in or on a test element on or into which the liquid or fluid has to be applied, which area should be brought into contact with the liquid or fluid.

A further object of the present invention is to improve and extend the above described known concepts proposing new embodiments and offering a much broader and general applicability.

The present invention proposes a device for interconnecting at least one liquid reservoir, e.g. a storing chamber, a liquid transporting channel or a liquid transporting tube, with an area to be supplied and/or brought into contact with the liquid or fluid according to the wording of claim 1. A device according to the present invention is proposed, comprising a preformed shaped capillary-like tube or conduit, respectively, being along at least a section at least nearly rigid.

The novelty is that the liquid, whatever its function will be, can be integrated on the same or similar disposable, typically a microfluidic device, and we can achieve also plurality, either parallel, sequential or combinatorial, all at the disposable level and for microscale applications.

An advantage of the present invention is the possibility to integrate in a cost effective way a liquid reservoir onto a disposable such as e.g. an analytical test device by eliminating the intermediate need to integrate also a valve. The container or sample holding chamber is kept physically separated from the fluidic part or from another container or chamber, respectively. In this way, a set of containers and channels can be simply manufactured on the same disposable or analytical element with any desired geometry, or even on separate embodiments. Connection between reservoirs and from reservoirs to channels or e.g. sample holding chambers is then established by means of devices as those proposed below consisting of external capillary-like tubes or conduits, individual or arrayed in different possible ways, and exercising possibly also other functions apart from a connecting function, e.g. chemical/biological reactive or separating function.

The basic element of the device according to the present invention, consists of a preformed shaped capillary-like tube or conduit, being along at least a section at least nearly rigid, for interconnecting at least one liquid reservoir, e.g. a storing chamber, a liquid transporting channel or a liquid transporting tube, with an area to be supplied and/or brought into contact with the liquid or fluid. The liquid and the area to be supplied are preferably on the same disposable or test element, but can be also on two separate assemblies or bodies.

By using the proposed device, an opening or port at a container or channel, being closed by means of a septum, membrane or other impermeable sealing layer, can be punctured or pierced by the rigid one end of the device, which means of the preshaped capillary-like tube or conduit. Another container or another part on a disposable, e.g. to be supplied with the liquid, can be punctured or pierced by the other end of the capillary-like tube or conduit, also comprising a rigid or hard nozzle-like end, to interconnect the two containers or areas for transporting the liquid or to supply the liquid from one location to the other. The capillary-like tube or conduit and the rigid ends may be manufactured of a rigid or semi-flexible polymer, such as e.g. a polyolefin, PEEK (Polyetheretherketone), PVC (Polyvinylchloride), polyamide or the like, of a metal, as e.g. steel or titanium, or glass, as e.g. fused silica, externally coated and eventually internally coated. Preferably, the preshaped capillary-like tube or conduit is comprising at both ends a rigid nozzle or small orifice. The invention shall be explained by means of examples and with reference to the attached drawings in which:
- Fig. 1a-c: show schematically the general mechanism for interconnecting a liquid reservoir to a fluidic part or detection zone situated on the same test element and/or on different embodiments;
- Fig. 2: shows the use of an external hollow staple rising from a staple cartridge to connect the liquid reservoir to the fluidic part or detection zone;
- Fig. 3a-c: show further designs of an inventive device;
- Figs. 4a-d: show possible two-dimensional arrays of device bridges arranged on carrying supports;
- Fig. 5a-c: show connector devices consisting of a channel drawn in an external plastic plate;
- Fig. 6: shows schematically the use of a two-dimensional array of device bridges to interconnect various liquid reservoirs to a plurality of fluidic tubes, and
- Fig. 7a-d: show one method to obtain arrayed structures such those in figure 2, 4a and 4d, during mass production.

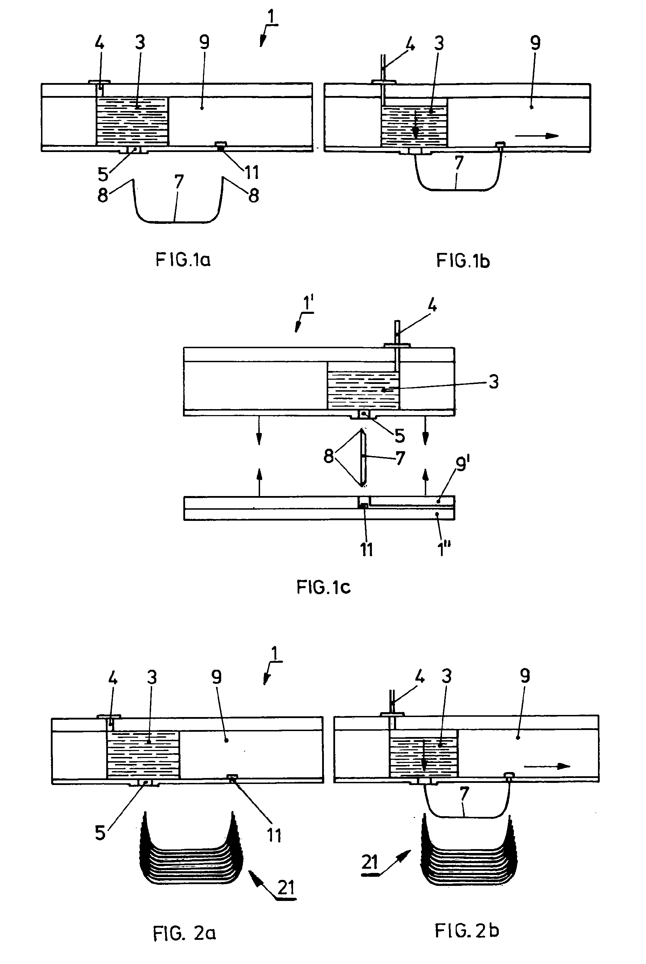

The simple case of the use of a bridge device is illustrated in Fig. 1 a + b, where test element 1 is containing a liquid storage reservoir 3 and a testing area 9 which has to be supplied with the liquid out of the storage chamber 3. In Fig. 1a the test element is shown in its initial non-used stage and in Fig. 1b in the situation of use.

For interconnecting the liquid chamber 3 with the testing area 9 an inventive device 7 or instrument is used, which is U-shaped and which has rigid open ends 8. This connecting or bridge device 7 is punched trough a septum or membrane 5 and at the same time trough a closing membrane or septum 11.

As one can see very clearly in Fig. 1b, the liquid out of the storage chamber 3 due to a vent opening 4 or pressure application through the opening 4, can penetrate through the capillary-like conduit 7 into the testing area 9 where a testing procedure, e.g. using the liquid, can be executed.

In principle, the device 7 may have any shape. Instead of U shape as shown in Fig. 1 a+b, e.g. straight linear shape, as shown in figure 1c, is only one further possibility.

Within the example as shown in fig. 1c a storage reservoir 3 is included within a liquid storage element 1', which reservoir element can be moved in direction of the indicated arrows towards a test element 1" on which e.g. an analytical element 9' is arranged. Again, by using an inventive device 7 with rigid open ends 8 on one side the septum or membrane 5 at the storage reservoir 3 and on the other side another membrane at the liquid introduction zone 11 arranged within the analytical test element 9' are punctured.

The capillary-like conduit 7 could play also an active role in this procedure besides the passive connecting role. For example a catalytic conversion or an enzymatic reaction having as substrate an analyte contained within the stored liquid, e.g. a reference standard, could be carried out during the passage through the conduit 7 if this is properly functionalized. In another example, the same conduit 7 could be used for clean up, e.g. removal of buffering salt, of a sample contained within the stabilized liquid, or even for separation of analytes by capillary electrophoresis or chromatographic methods.

If a plurality of testing elements 1 have to be actuated, which means have to be supplied with interconnecting devices 7, a stack of devices 7, e.g. arranged like staples in a staple magazine or cartridge may be used as shown in Fig. 2.

From a stack of devices 7 stored in a staple-like cartridge a single device 7 is separated with a stapler-like mechanism and connects the liquid reservoir 3 to the fluidic part 9 of the test element by puncturing the septa or closing membranes 5 and 11, respectively. The capillary tube-like inventive interconnecting device 7 may be disposed together with the device after use.

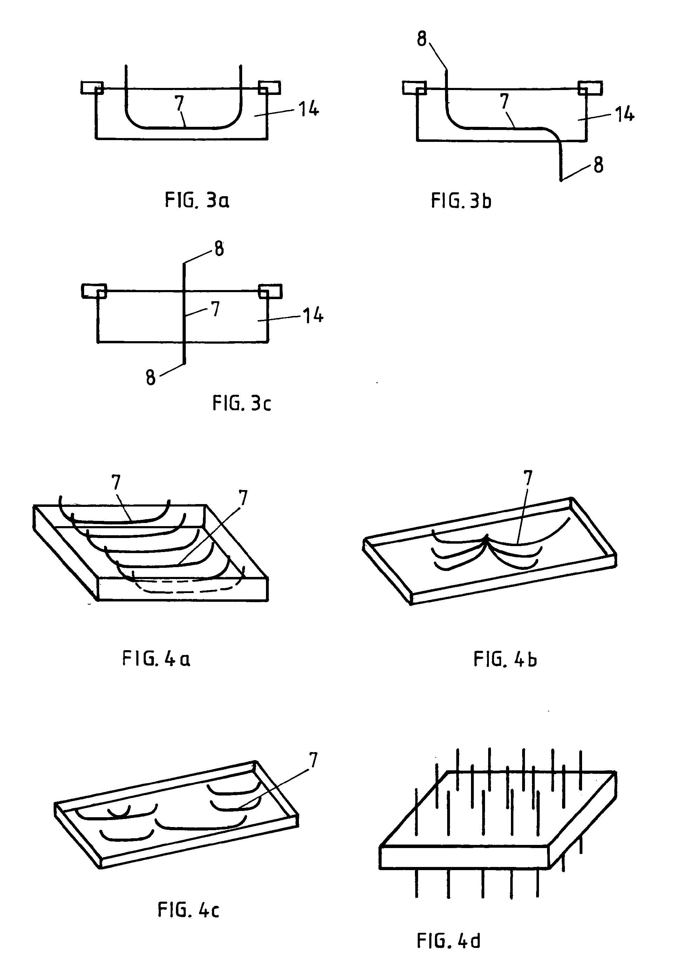

In Fig. 3 further possible designs of an inventive interconnecting device 7 are shown, with the capillary conduit arranged within a support frame 14 for better handling.

In Figs. 4a to 4d two-dimensional arrays of bridges or devices 7 are shown which can be arranged e.g. in parallel as shown or in sequence for interconnecting reservoirs to individual channels or multiple channels and/or different reservoirs for liquid mixing and carrying out reactions in any possible combinations.

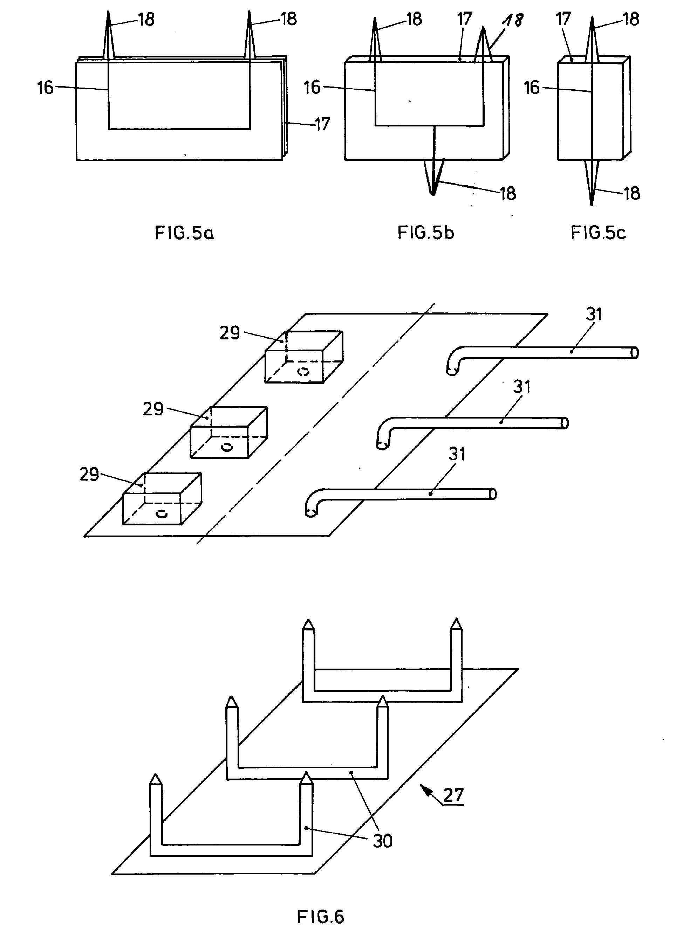

Figs. 5 a-c again show different designs of inventive coupling devices, the interconnecting conduit 16 being micro-machined within rigid plates 17, as e.g. plates made out of a polymer. Two protruding barbs 18 at the extremities of the conduit are preferred to puncture the septa as explained with reference to Figs. 1 and 2. Again only some examples are shown as different geometries with different orientations of the extremities are possible.

Fig. 6 shows a two-dimensional array 27 of individual connectors or conduits 30, provided for interconnecting a plurality of liquid reservoirs 29 with respective liquid channels or tubes 31. By using the arrangement 27, a plurality of liquid chambers can be interconnected to the respective tubes 31 simultaneously, and therefore at the same time e.g. a plurality of testing procedures can be executed.

The various designs, arrays or applications of the inventive instrument are only used as examples for better describing the present invention. Another feature refers to the materials to be used for the inventive device or instrument. Again, the material to be chosen is e.g. dependent on the application, which means is dependent upon the liquid to be transported through the capillary-like conduit and on the function of this, passive or active. Fused silica is in this context a good substrate for chemical derivatization, while some metals are known to have inerent catalytic properties and are good heat conductors. It could be indeed that the capillary-like conduit is to be exposed to heat for a certain reaction to occur within it. In other cases, inert materials are instead preferred. In general one can choose from a range of polymers such as polyolefins, PEEK, polyamide, PVC, which are sufficiently rigid or semi-rigid. Metal can be for example iron, steel or titanium. Fused silica capillaries like those used for capillary electrophoresis can be also employed.

Another feature refers to an equipment for applying the inventive devices or instruments individually to interconnect liquid chambers to e.g. a testing element. As shown with reference to Fig. 2, the devices can be stored in a stack 21 which can be arranged similar to the so-called Bostitch® fastening clips, where usually a number of 50 or 100 are arranged in line, one clip abutting to the next one. Similar to the mentioned Bostitch® fastening clips also the proposed inventive capillary-like conduits can be arranged and be punched individually for the various testing pads, where a testing or analytical area has to be supplied with a liquid, arranged in a liquid chamber on the same disposable.

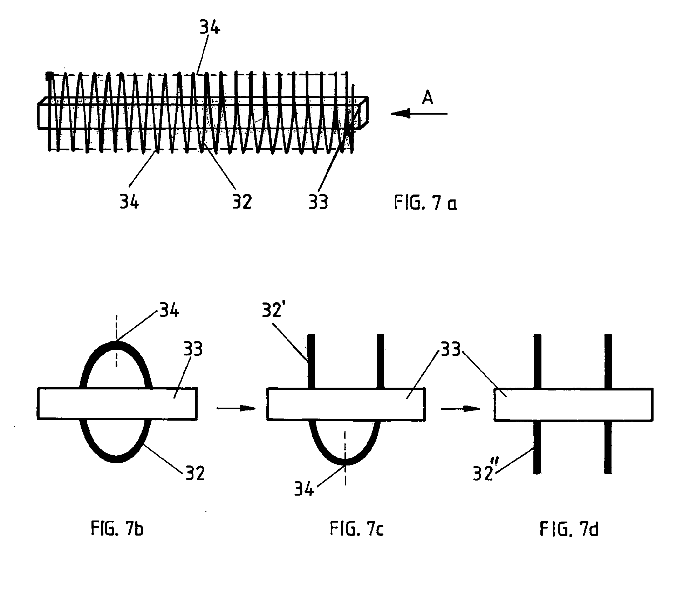

In figures 7 a-d a method is schematically suggested for mass production of device arrays, especially in parallel arrangement, as schematically shown in figures 2, 4a, 4d and 6, characterized in that a long capillary-like tube or conduit is coiled in the shape of a spring 32, eventually functionalized in this shape for active function described above, encased within a support frame or plate 33, and subsequently cut longitudinally along one or two exposed axis 34 in order to create a series of U-shaped, or straight equal-sized devices with open ends.

In Fig. 7b the structure of fig. 7a is seen in direction of the arrow A, which means the spring or coil 32 not being cut along the axis 34.

In fig. 7c the coil or spring 32 of the structure according to fig. 7a is cut along the upper axis 34, so that U shaped elements 32' will be created, arranged one U shaped element in parallel behind the other one.

If the coil or spring 32 is cut along both axes 34 then straight-lined elements 32" will be created in a parallel arrangement as very similar is schematically shown in fig. 4d.

Of course within the figures 7a-7d only one method is suggested for the production of arrays of inventive elements and it is of course possible to use other methods.

## Claims

1. Device for interconnecting at least one liquid reservoir with an area on a test element to be supplied and/or brought into contact with the liquid, **characterised in that**:
- the liquid reservoir and the area to be supplied and/or brought into contact with the liquid are integrated on the same test element or are arranged on separate embodiments and
- the interconnecting device is a preshaped hollow capillary-like tube or conduit with an inlet and an outlet which is at least along a section at least nearly rigid.

2. Device according to claim 1, **characterized in that** the inlet and the outlet or the open end-sections respectively are nozzle orifice-like, capable of puncturing or piercing a membrane or septum.

3. Device according to one of the claims 1 or 2, **characterized in that** the preshaped capillary-like tube or conduit with puncturing or piercing ends and/or the open-end sections of the capillary-like tube or conduit is made out of a semi-rigid or rigid polymer, metal, glass or combinations thereof.

4. Device according to one of the claims 1 to 3, **characterised in that** the device is stacked within a cartridge or stack-like array.

5. Device according to one of the claims 1 to 4, **characterised in that** the device is arranged on or within a frame or support plate, etc.

6. Device according to one of the claims 1 to 5, **characterized in that** the interconnecting device is made out of fused silica.

7. Arrangement for interconnecting a plurality of liquid reservoirs with areas to be supplied and/or brought into contact with the liquid or liquids, respectively, **characterised in that** on or within a support frame or support plate in the sense of an array a plurality of devices according to one of the claims 1 to 6 are arranged.

8. Method of interconnecting at least one liquid reservoir with an area in or on a test element to be supplied and/or brought into contact with the liquid, **characterised in that** with the use of a preshaped tube or conduit having rigid nozzle- or orifice-like sections at both ends, openings or ports arranged at the chamber and at the area, each closed by a septum or closing membrane, are punctured or pierced with the nozzle or orifice-like sections in such a way that the liquid can flow or penetrate trough the device from the reservoir to the area to be supplied with the liquid.

9. Use of the device according to one of the claims 1 to 6 for interconnecting a liquid reservoir with a testing or detecting zone on an analytical test element to be supplied with the liquid from the storing chamber, the testing zone and the liquid reservoir being arranged on the same element or on separate elements.

10. Use according to claim 9 for test elements in medicine, biochemistry, for pharmaceutical use, etc.

11. Use of the device according to one of the claims 1 to 6 for an arrangement comprising the reservoir for storing liquids to be supplied for washing, diluting, eluting, supplying reagents, etc.

12. Use according to one of the claims 9 to 11, **characterized in that** the device exercises an active function like e.g. a catalytic conversion, a separation step or an enzymatic reaction having as substrate an analyte contained within the stored liquid, or a clean-up step before further processing.

13. Method for mass production of devices according to one of the claims 1 to 6 or an arrangement according to claim 7, especially for arrays of parallel devices, **characterized in that** a long capillary-like tube or conduit is coiled in the shape of a spring; encased within a support frame or plate e.g. according to claims 4 or 5, and subsequently cut longitudinally along one or two exposed axis in order to create a series of U-shaped or straight equal-sized devices with open ends.
